(19) Europäisches Patentamt
European Patent Office
Office européen des brevets

(11) **EP 1 874 263 B1**

(12) **EUROPEAN PATENT SPECIFICATION**

(45) Date of publication and mention
of the grant of the patent:
**31.12.2014  Bulletin 2015/01**

(51) Int Cl.:
*A61C 17/34* (2006.01)      *A61C 17/22* (2006.01)

(21) Application number: **06758592.7**

(22) Date of filing: **25.04.2006**

(86) International application number:
**PCT/US2006/015691**

(87) International publication number:
**WO 2006/118880 (09.11.2006 Gazette 2006/45)**

(54) **ORAL CARE COMPOSITIONS, REGIMENS AND DEVICES**

MUNDPFLEGEZUSAMMENSETZUNGEN, -THERAPIEN UND -VORRICHTUNGEN

COMPOSITIONS DE SOIN BUCCAL, SCHEMAS POSOLOGIQUES ET DISPOSITIFS ASSOCIES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **29.04.2005  US 676680 P**

(43) Date of publication of application:
**09.01.2008  Bulletin 2008/02**

(73) Proprietor: **The Procter & Gamble Company
Cincinnati, OH 45202 (US)**

(72) Inventor: **PINYAYEV, Aleksey, Mikhailovich
West Chester, Ohio 45069 (US)**

(74) Representative: **Joos, Uta Susanne et al
Braun GmbH
Patentabteilung
Frankfurter Straße 145
61476 Kronberg im Taunus (DE)**

(56) References cited:
**WO-A-99/34766          WO-A-2004/012621
WO-A-2005/023131      US-A1- 2003 180 690**

**Description**

FIELD OF THE INVENTION

The present invention relates to oral care devices for sealing one or more tooth surfaces, comprising an oral care composition containing a sealing agent for forming a sealing film on said tooth surfaces.

BACKGROUND

Efforts have been made in the oral health care field to provide therapeutic methods beyond conventional brushing with a manual toothbrush and a dentifrice. For example, a wide array of electrically powered toothbrushes are commercially available which can provide superior benefits over manual brushes. In addition, toothbrushes are available that feature bristles or brushing elements adapted for specific types of consumers, such as children.

Furthermore, a variety of dentifrice products are available, many of which are designed for specific functions such as whitening of dental surfaces. Moreover, numerous other oral care products are available for various conditions or treatments such as mouthwashes, bleaching strips, and flosses.

Although satisfactory in many respects, a need remains for further advances and improvements in oral health care, and specifically, in therapeutic practices performed by consumers of oral health care products.

WO 99/34766 describes a method for applying a sealant to tooth surfaces, wherein first a pre-adhesive polymer composition is applied and exposed to a visible light source to effect polymerization, and then a second composition such as a sealant is applied to the pre-adhesive layer so as to achieve better bonding. WO 2004/012621 describes a dental hygiene system including a light emitting toothbrush for subjecting an oral care composition containing $TiO_2$ particles to UVA light so as to produce highly reactive hydroxyl radicals which oxidize and ultimately destroy certain species of bacteria and microorganisms. US 2003/0180690 describes an oral care composition including a photosensitive agent for eliminating harmful bacteria, wherein said bacteria eliminating agent is activated by light emitted from a toothbrush head. Furthermore, WO 2005/023131 describes a lighted toothbrush emitting light of a sufficient luminous intensity and flux density resulting in whitening of the teeth.

SUMMARY OF THE INVENTION

It is an objective of the present invention to provide an improved oral care device allowing easy application of a single sealing film on the tooth surfaces even when used by unskilled consumers such as children.

According to the present invention, this objective is achieved by a device as defined in claim 1. Preferred embodiments of the invention are laid down in the dependent claims.

BRIEF DESCRIPTION OF THE DRAWINGS

It is believed that that the present invention, will be further understood from the following description taken in conjunction with the accompanying drawings in which:

> **FIG. 1** is a schematic representation of the crown surfaces divided into three horizontal and vertical sections;
> **FIG.2** is a perspective view of an electric toothbrush in accordance with the present invention;
> **FIG. 3** is a top plan view of the electric toothbrush of **FIG. 2**;
> **FIG. 4** is a cross-sectional side view of the toothbrush of **FIG. 3**, taken along line 3-3 thereof;

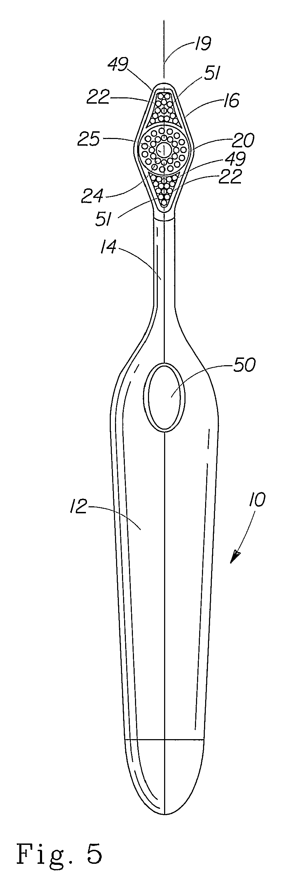

> **FIG. 5** is a top plan view of an electric toothbrush of the present invention incorporating light transmitting bristles;
> **FIG. 6** is a top plan view of an electric toothbrush of the present invention incorporating a replaceable head comprising a light emitting element and which is devoid of bristles; and

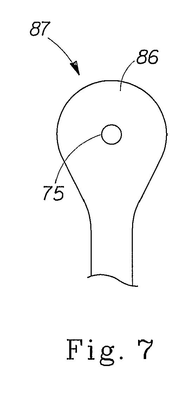

> **FIG. 7** is a rear plan view of an electric toothbrush of the present invention incorporating a light emitting element on a rear or bottom surface of a toothbrush head.

DETAILED DESCRIPTION OF THE EMBODIMENTS

Generally, the present invention relates an oral care composition for use as means for sealing one or more tooth surfaces containing a sealing agent for forming a sealing film on said tooth surfaces, characterized in that said oral care composition contains, in addition to said sealing agent, an abrasive for removing a previously formed sealing film before formation of a new film, whereby a toothbrush (10) having a handle (12) and a head (16) is used for activating said sealing agent, wherein said toothbrush (10) comprises a head (16) with bristles (49,51) for brushing the teeth with the abrasive to remove the previously formed sealing film and distributing the sealing agent, and a light emitting element (75) for emitting light onto said sealing agent to activate the sealing agent, wherein a switch is provided for switching on said light emitting element (75) after brushing the teeth, thereby forming a new sealing film after removal of the previously formed sealing film.

Non-limiting forms of oral care compositions suitable for use with the present invention include dentifrices, gels, rinses, foaming formulations, and the like. The oral care appliance(s) used in the regimens described herein comprise a light-emitting element or other energy emitting element (e.g., a heat emitting element) that activate an oral care composition comprising a sealing agent. As used herein, the phrase "sealing agent" is intended to refer to one or more monomers, polymers, compositions, compounds, molecules, agents, and mixtures thereof that can form a film on a hard tissue surface when exposed to an energy source. The film can be formed or activated by a variety of mechanisms, including polymerization (including condensation reactions and addition reactions). Activation occur upon exposure of the sealing agent to light. The film may have a thickness between about one molecular layer and about 30 micrometers or greater than about 1, 5, 10, 15 and/or less than about 30, 25, 20, 15, or 10 micrometers. Film is preferably degradable and is formed on healthy teeth without caries.

The oral care appliances is provided in the form of a manual or electric toothbrush.

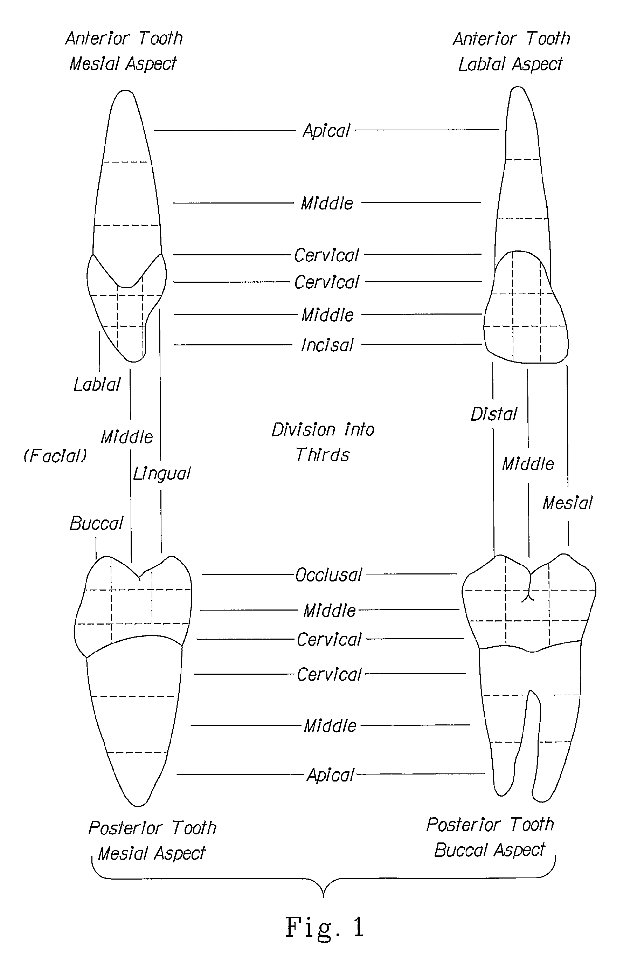

As used herein, the phrase "hard tissue" is intended to encompass one or more crown surfaces, which are illustrated by way of example in FIG. 1, of one or more teeth of the upper and/or lower dentition. The crown surfaces include crown elevations (e.g., cusps, tubercles, cingulum, ridges, etc.) and crown depressions (e.g., fossae, developmental grooves, supplemental grooves, pits, etc.), lobes, and contact areas. In one embodiment, the crown surfaces are the occlusal crown surfaces and in another embodiment the crown surfaces comprise the occlusal middle crown surfaces.

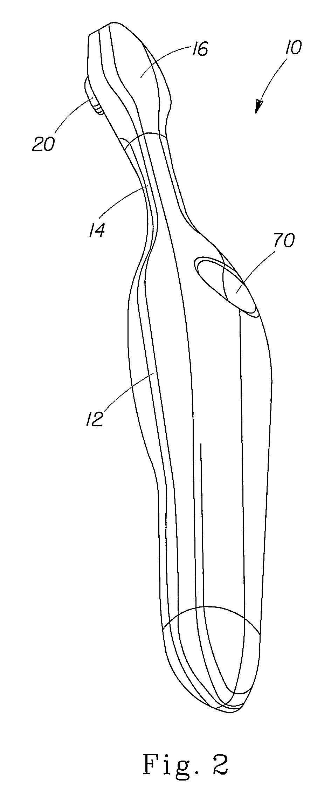

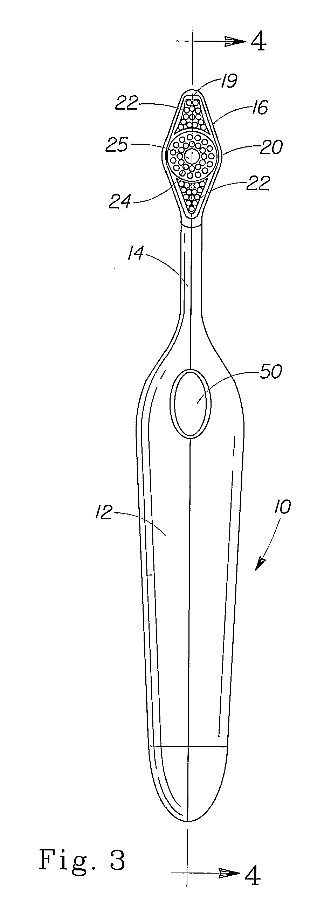

As shown in **FIGS. 2 and 3**, an electric toothbrush includes a handle **12** and a neck **14** attached to the handle **12**. A head 16 is attached to neck **14**. The head and/or neck may be integrally formed with the handle or one or both may releasably engage the handle. Further, the neck may be integrally formed with the handle and the head may releasably engage the neck. Since the neck may be integrally formed with either the handle or head, for convenience herein, the word "head" is intended to refer to either a head alone or the combination of a head and neck and the word "handle" is intended to refer to the handle alone or the combination of a handle and neck. As discussed hereafter, the head may or may not include bristles. Typically, the head is larger than the neck **14**, which is also typically smaller than the handle **12**. Referring now to **FIG. 3**, the head **16** further is defined by a longitudinal axis **19**, and may comprise one or more moving bristle holders **20** and one or more optional static bristle holders **22**. In this embodiment the static bristle holders **22** are located on opposite sides of the moving bristle holder **20**. The moving bristle holder **20** in this embodiment is located at the center of the head **16**, but it may be located anywhere on the head. The moving bristle holder **20** includes a plurality of bristles **24** supported and retained on the bristle holder **20**. The moving bristle holder can oscillate or rotate about an axis of motion approximately normal to the longitudinal axis **19** of the head **16**, although other motions may be provided. The static bristle holders and the arrangement of the static bristles disposed thereon can also be widely varied. For example, the static bristles might partially or wholly circumscribe the moving bristle holders or may be disposed in a gap between the moving bristle holders. Examples of some bristle holder motions and bristle arrangements suitable for use with the present invention are described in US 20030126699; US 20030084525; US 20030084524; US 20030084526; and WO 03/063723; and WO 03/063722.

As shown in **FIG. 3**, the handle **12** further includes a hollow portion **30** which houses a motor **32**, and has a longitudinal axis **34**. The motor **32** powers the moving bristle holder **20** through one or more shafts **44**. The shaft may rotate, oscillate, linearly reciprocate, gyrate, orbit, or move in a conical fashion when driven by the motor in order to impart one or more motions to the moving bristle holders. A gearing arrangement may operatively interconnect the shaft **44** and the motor **32**, although arrangements that do not include gearing arrangements may also be provided. Exemplary shaft and/or gearing arrangements suitable for use with the present invention are shown in U.S. Patent Nos. 6,360,395 and 5,617,601, and U.S. Patent Application Nos. 2003/0134567 and 2003/0163881 as well as in other patents and patent publications referenced herein. The handle also has a power source, such as one or more disposable or rechargeable batteries, disposed therein for powering the motor and other electrical elements of the toothbrush. Alternatively, the electric toothbrush may be connected to an external power source for powering the motor. One or more switches 50 in electrical communication with the power source may be disposed on the handle for activating the motor and/or the other electrical elements, such as a light emitting element. As used herein, the term "light-emitting" element is intended to refer to an element that converts electrical energy into light, as opposed to an element that merely conducts or transmits light, such as a fiber optic cable or wire (i.e., a light transmitting element). The toothbrush can optionally include a removable head and/or neck that releasably engages the handle. The toothbrushes can also comprise one or more alarms or signaling structures (e.g., a speaker or light source) to indicate for example the beginning, progress, or completion of a particular treatment regimen or process. For instance, an audible signal might indicate the initiation of output from a light emitting element. The alarms or signals can be in the form of auditory, visual, or tactile signals. Tactile signals may include vibration or other motion of certain parts of the toothbrush, for example the handle or the moving bristle holders. Examples of auditory alarms include, but are not limited to one or more beeps, a series of notes, a song of portion thereof, one or more tones, one or more rings, spoken words or phrases, and combinations of these. A timer can also be incorporated into the device so that upon expiration of a set period of time, another or different signal is provided. The timer might be employed to ensure that sufficient exposure to light or one or more oral care compositions has occurred, ensure that exposure times are not exceeded, ensure sufficient time delays between administering of multiple step regimens, indicating to the user to brush or otherwise direct efforts from one region of the oral cavity to another, and combinations of these. It is further contemplated that sensors may be incorporated into the toothbrush head that can detect conditions, markers, stimuli, and agents in the oral cavity.

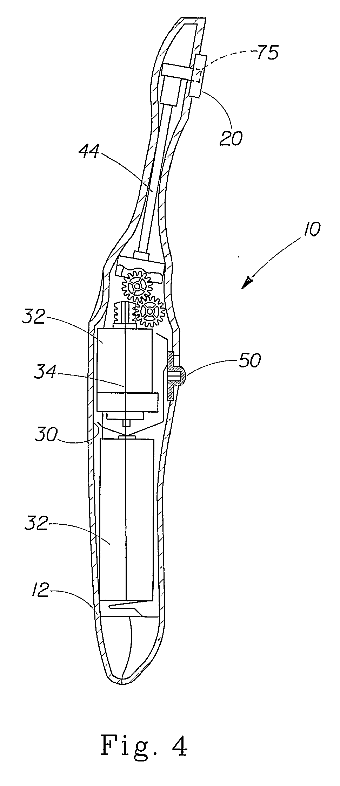

the toothbrushes of the present invention comprise a light emitting element, and the toothbrush is used in combination with an oral care composition containing a sealing agent that is applied to the hard tissue, which comprises the occlusal surfaces of one or more teeth of the upper and/or lower dentition. The output of the light emitting element is directed to the hard tissue to activate the sealing agent. The output of the light emitting element can be directed at the hard tissue either by the arrangement of the light emitting element on the toothbrush or by the regimen employed by a user. In one embodiment, bristles which can optically transmit light may be utilized, for example where the bristles are coated so that substantially all of the light is emitted from the bristle tips as opposed to along the bristle length. This can focus the light more effectively upon the interdental spaces, pits, and fissures of the crown surfaces where it may be most desirable to activate the sealing agent. In this arrangement, the circumference of the outer surface of the bristles may be opaque, reflective or substantially so while the bristle tips or end portions are transparent or translucent. In one embodiment, at least about 20%, 30%, 40%, 50%, 75%, or 100% of the outer surface is opaque or substantially so. The bristles can be provided with an opaque coating on the outer surface or comprise a transparent or translucent core surrounded by an opaque sheath. The latter bristles can be co-extruded. A co-extrusion process that may be suitable for forming these bristles is described in USPNs 6,862,771; 5,313,909; and 5,770,307. In one embodiment, such bristles 49 are located within the inner portion of the head so that they may more effectively contact the occlusal middle crown surfaces, as shown by way of example in **FIG 4**. These bristles may be formed into between about 2 and about 12 tufts of bristles within the inner portion of bristle holder 22. Conventional bristles 51 can be formed into tufts disposed adjacent the bristles 49 and along the outer edge or side of the bristle holder 22.

The oral care composition can be applied to the hard tissue of the oral cavity before, during, or after a traditional tooth brushing regimen. For instance, an oral care composition containing the sealing agent can be applied before or after a step of brushing the teeth. In one embodiment, a rinse containing the sealing agent might be applied after a brushing regimen and light energy from a light emitting element on the toothbrush might be applied to the occlusal surfaces of one or more teeth of the upper and/or lower dentition after application of the rinse.

Alternatively, the sealing agent may be incorporated into the dentifrice and the sealing agent can be activated at the same time as the tooth brushing step occurs or after completion of the brushing regimen. For example, after completing a brushing regimen (typically about 2 to 3 minutes or less), the toothbrush can provide a signal indicating that the light emitting element has or will be turned on and that the user should proceed with moving the electric toothbrush along the occlusal surfaces of one or more teeth of the upper and/or lower dentition. Additional signals may be provided to the user by the electric toothbrush to assist with application of the light energy to the occlusal surfaces of the upper and lower dentition. For instance, four signals (one for each quadrant of the upper and lower dentition) might be provided to the user to assist the user with providing sufficient application time to activate the sealing agent by signaling the beginning and end of a time period for light application to each quadrant.

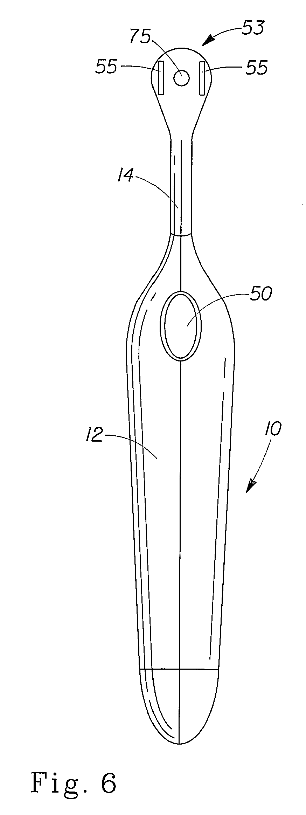

In another embodiment, a brushing head comprising a plurality of bristle tufts can be removed from the toothbrush after completion of the brushing regimen and a second toothbrush head 53 containing a light emitting element 75 can be substituted for the first toothbrush head. The second toothbrush head may be devoid of bristles, as shown by way of example in FIG. 6. The toothbrush incorporating the second toothbrush head can then be maneuvered along the occlusal surfaces of one or more teeth of the upper and/or lower dentition. The light emitting element of the second toothbrush head can be turned on automatically by the toothbrush, optionally after a time delay following attachment of the second toothbrush head to the toothbrush handle, or may be switched on and off by the user via a switch located on the toothbrush handle. In one embodiment, the switch can be the same switch that also activates the motor. In another embodiment, a second switch for powering the light emitting element can be provided. The toothbrush head 53 may incorporate one or more upstanding opaque and/or reflecting walls 55 that help confine the light from the light emitting element to the occlusal surfaces of the teeth and help guide the light emitting element 75 over those surfaces. The walls 55 can be made from an elastomeric material such as a natural or synthetic rubber. In one embodiment, the distance between the walls 55 is equal to about the average width of the first molar of the permanent dentition or at least about 4, 6, 8, or 10 mm and/or less than about 12, 10, 8, or 6 mm. The walls 55 can have a length at least about 4, 6, 7, or 10 mm and/or less than about 16, 14, 12, 10, 8, or 6 mm. The light emitting element 75 may be provided in a form that provides a narrow beam of light so that the light output is directed primarily to the occlusal crown surfaces. In one embodiment, the total included angle of the light-emitting element, which is the total angle at which 90% of the total luminous flux (lumens) is captured, is at least about 5, 10, 15, 20 degrees and/or less than about 40, 30, 20 and 10 degrees.

In one embodiment, light energy is applied for less than about 4, 3, 2, or 1 minutes and/or greater than about 15, 30, 45, 60, or 75 seconds. Repetition of this process can vary depending upon the durability of the film formed by the sealing agent. For example, this process can be repeated for each brushing cycle, once per day, twice per day, once every other day, once per week, or once per month, etc. During this process, electrical power to the motor may be automatically turned off by a controller (e.g., a programmable controller or integrated circuit or chip) of the electric toothbrush so that the moving bristle holders are stationary and do not further distribute the sealing agent during the activation process.

The film or coating formed by the sealing agents is removed by abrasive particles such as those typically found in dentifrices. It is desirable to remove the film before formation a new film to avoid build-up of several layers of film over a period of multiple uses of a sealing agent, which could become noticeable to a user. Therefore, it is desirable to include a step of removing a pre-existing film prior to forming a subsequent film. For example, it may be desirable to brush with a dentifrice containing a sufficient amount of an abrasive agent to remove a previously formed film before forming a new film on the teeth from a sealing agent.

Dental abrasives useful in the compositions of the subject invention include many different materials. Suitable abrasives include, for example, silicas including gels and precipitates, insoluble sodium polymetaphosphate, hydrated alumina, calcium carbonate, dicalcium orthophosphate dihydrate, calcium pyrophosphate, tricalcium phosphate, calcium polymetaphosphate, and resinous abrasive materials such as particulate condensation products of urea and formaldehyde. Another class of abrasives for use in the present compositions is the particulate thermo-setting polymerized resins as described in U.S. Pat. No. 3,070,510 issued to Cooley & Grabenstetter on Dec. 25, 1962. Suitable resins include, for example, melamines, phenolics, ureas, melamine-ureas, melamine-formaldehydes, urea-formaldehyde, melamine-urea-formaldehydes, cross-linked epoxides, and cross-linked polyesters. The silica abrasive polishing materials herein, as well as other abrasives, may have an average particle size ranging between about 0.1 to about 50 $\mu$m, and preferably from about 5 to about 15 $\mu$m, The abrasive can be precipitated silica or silica gels such as the silica xerogels described in Pader et al., U.S. Patent 3,538,230, issued Mar. 2, 1970, and DiGiulio, U.S. Patent 3,862,307, issued Jan. 21, 1975. Preferred are the silica xerogels marketed under the trade name "Syloid" by the W.R. Grace & Company, Davison Chemical Division. Also preferred are the precipitated silica materials such as those marketed by the J. M. Huber Corporation under the trade name, Zeodent®, particularly the silica carrying the designation Zeodent 119®. The types of silica dental abrasives useful in the compositions of the present invention are described in more detail in Wason, U.S. Patent 4,340,583, issued July 29, 1982. The abrasive in the compositions described herein is generally present at a level of from about 6% to about 70% by weight of the composition. In one embodiment, a dentifrice contains from about 10% to about 50% of abrasive, by weight of the composition. A particularly preferred precipitated silica is the silica disclosed in US Pat. Nos. 5,603,920, issued on Feb. 18, 1997; 5,589,160, issued Dec. 31, 1996; 5,658,553, issued Aug. 19, 1997; 5,651,958, issued July 29, 1997, all of which are assigned to the Procter & Gamble Co. Mixtures of abrasives can be used. A dentifrice that may be suitable for is also disclosed in 6,740,311.

In one method of the present invention, a dentifrice contains a sealing agent and sufficient abrasive to remove a prior film of the present invention. The abrasive dentifrice is used first to brush the teeth and remove the prior film followed by activation of the sealing agent to form a new film on the teeth. Optionally, a rinse can be applied after the step of brushing with the abrasive dentifrice but before activation of the sealing agent to rinse particulates of the old film from the teeth. The rinse could also contain a sealing agent. In some instances, it may be desirable to activate a sealing agent to form a film in the morning and brush with an abrasive dentifrice in the evening, without activation of a sealing agent, to remove the film formed in the morning. In one embodiment, a portion of the film is removed. In another embodiment at least about 10%, 20%, 30%, 40%, 50%, 60%, 70% and/or less than about 95%, 90%, 80%, 70%, 60%, or 50% of the film is removed. Preferably, substantially all of the film is removed.

As used herein, the term "light" is intended to encompass the spectrum of both visible and non-visible (e.g., ultraviolet and infra-red) light. In one embodiment of the toothbrush of the present invention the light emitted from the light-emitting element can be from about 370, 390, 410, 430, 450, 470, 490, 510, 530, 550, 570, 590, 610, 630, 650, 670, 690, 710 nm and/or less than about 1100, 1000, 900, 770, 750, 730, 710, 690, 670, 650, 630, 610, 500, 400 nm. In another embodiment the light emitted can have a wavelength of greater than about 420, 430, 440, 450, 460, 470, 480, and/or 490 nm and/or less than about 490, 480, 470, 460, 450, 440, 430 nm. In yet another embodiment the light emitted can have a wave length from about 420, 430, 440, 450, 460, 470 nm and/or less than about 470, 460, 450, 430 nm. It will be appreciated that the particular range of wavelengths selected can depend upon the desired color of the light. The oral care appliance can also emit light of a particular intensity. Intensity can be either luminous intensity measured in candelas (or lumens/steradian), or flux density measured in Watts/meter$^2$. In one embodiment the flux density of the inventive illuminated electric toothbrush is from about 10, 20, 30, 35, 40, 45, 50, 55, 60, 70, 100, 200, 250 mW/cm$^2$ and/or less than about 1000, 750, 500, 400, 300, 250, 200, 150, 100, 70, 60, 50, 40, 30 mW/cm$^2$ or any combination of these.

The light-emitting elements can also be arranged so that the principle direction of light emission is generally perpendicular to the top surface of the bristle holders and/or generally parallel to the direction of the bristles of the bristle holder. One example is illustrated in **FIGS. 2 and 3**, where a light emitting element 75 is disposed in a moving bristle holder 20. The light emitting element 75 can also be arranged at other locations on the head so that the output of the light emitting element can illuminate the occlusal surfaces of one or teeth when the head is maneuvered into a position where the light is directed onto these surfaces. In another embodiment shown in **FIG**. 7, light may be emitted from light emitting element 75 disposed on a rear surface 86 of the toothbrush head so that it may be directed toward the occlusal surfaces of one or more teeth. Panels that are selectively painted with light blocking coatings can also be used to tailor the manner in which light is emitted from the device or appliance. While the preceding examples illustrate light emitting elements that are located on the head of the toothbrush, it is contemplated that the light emitting elements might be located elsewhere. For example, the light emitting elements might be located on in the neck or handle and light transmitting structures, such as optical fibers, transmit the light to the head for light emission from the head.

A wide variety of light-emitting elements may be used with the present invention. In one embodiment the lighting-emitting element is a small, low power consumption, light-emitting diode (LED) such as those commercially available under the designation Luxeon™ manufactured by Lumileds Lighting, LLC of San Jose CA. Other commercially available lighting units include those from American Opto Plus LED Corporation. The LED can operate from a relatively low voltage DC power supply, such as in one embodiment between about 0.5 volt and about 5 volts, an in another embodiment between about 1 volt and 3 volts, and in another embodiment between about 1.6 to about 2.4 volts.

In other embodiments, the light radiation source is solid-state lighting (SSL) including a light-emitting diode (LED) and LED variations, such as, edge emitting LED (EELED), surface emitting LED (SELED) or high brightness LED (HBLED). The LED can be based on different materials such as AlInGaN/AIN (emitting from 285 nm), SiC, AlInGaN, GaAs, AlGaAs, GaN, InGaN, AlGaN, Alln-GaN, BaN, InBaN, AlGalnP (emitting in NIR and IR), etc. LEDs also include organic LEDs which are constructed with a polymer as the active material and which have a broad spectrum of emission. The radiation source can be an LED such as shaping of LED dies, LED with transparent confinement region, photonics crystal structure, or resonant-cavity light-emitting diodes (RCLED).

Other possibilities include a superluminescent diode (SLD) or LED which preferably can provide a broad emission spectrum source. In addition, laser diode (LD), waveguide laser diode (WGLD), and a vertical cavity surface emitting laser (VCSEL) can also be utilized. The same materials used for LED's can be used for diode lasers. Other possibilities include a fiber laser (FL) with laser diode pumping. Fluorescence solid-state light source (FLS) with electro or light pumping from LD, LED or current/voltage sources can also be the radiation source. The FLS can be an organic fiber with electrical pumping.

Lamps such as incandescent lamps, fluorescent lamps, micro halide lamps or other suitable lamps may also be used with the present invention. A lamp can provide the radiation source for white, red, NIR and IR irradiation. For the 5-100 $\mu$m range, quantum cascade lasers (QCL) or far infrared emitting diodes can be used. One skilled in the art will appreciate that a variety of radiation sources can provide the necessary optical radiation for the sensor responsive toothbrush depending on size, power requirements, desired treatment regimen, and combinations thereof.

For light-emitting diodes, the dominant or central wavelength can determined by the equations:

$$\lambda_c = \int_{\lambda\min}^{\lambda\max} I(\lambda) \cdot \lambda \cdot dl \, / \int_{\lambda\min}^{\lambda\max} I(\lambda) \cdot d\lambda$$

For continuous spectrums, and

$$\lambda_c = \sum_i I_i \lambda_i \, / \sum_i I_i$$

For discrete spectrums.
Wherein I is illumination intensity and $\lambda$ is wavelength.

These equations are further described in CIE 127 (1997) entitled "Measurement of LEDs", which is published by the International Commission of Illumination. These equations and methodology can be also be applied to light-emitting elements other than LEDs, or other methodologies and equations known in the art can be utilized to determine the dominant or central wavelength of a light-emitting element. The spectral (e.g., peak wavelength), photometric (e.g., luminous intensity), radiometric (e.g., radiant intensity), and colormetric (e.g., dominant wavelength) characteristics of the light-emitting elements can be measured using devices known in the art, such as OL 730CV Radiometer/Photometer manufactured by Optronic Laboratories, Inc. of Orlando, FL Some light may not have a dominant or central wavelength (e.g., white light).

As previously noted, the term "light" is intended to encompass the spectrum of both visible and non-visible (e.g., ultraviolet and infra-red) light. This spectrum may extend from light having a dominant or centroid wavelength of about 10 nm (far ultraviolet) to light having a centroid wavelength of $10^6$ nm (infrared), or the spectrum may include visible light having a centroid wavelength between about 370 nm and about 770 nm. Further, the spectrum may include visible light having a centroid wavelength between about 370 to about 500. This may be different than the peak wavelength which is the wavelength at which the radiant intensity of the LED is maximum.

The toothbrushes described herein can dispense one or more oral care compositions. For these embodiments, the toothbrushes can utilize a dispensing system that includes one or more cartridges, each containing a particular oral care composition and sealing agent. Additional details of cartridges, dispensing systems and the like are set forth in U.S. patent application Publication No. 2003/0194678 filed April 25, 2003. Other means for supplying an oral care composition comprising a sealing agent to the hard tissue include strips, trays, paint on applicators, and the like. Examples of strips which are suitable for use in the inventive method include, but are not limited to, the strips disclosed in U.S. Patent Nos. 6,096,328, 6,136.297, 6,045,811, 5,989,569, 5,894,017, 5,891,453, 5,879,691, 6,277,458, 6,287,120 and 6,343,932. Examples of trays suitable for use in the inventive method include, but are not limited to, those described in U.S. Patent Nos. 5,846,058, 5,816,802 and 5,895,218, and other pre-loaded devices such as those described in U.S. Patent No. 5,310,563. The present invention also includes the use of oral care compositions in the form of strips, films, or layers that, when placed within an oral cavity, dissolve. Typically such films are fast dissolving, and dissolve in less than 60 seconds, and often in less than 30 seconds. Additional non-limiting details of such films are provided in U.S. Patent Nos. 5,948,430 and 6,709,671. The strips, films, or layers can be used by placing the film on the surface of interest, such as for example the occlusal surface of one or more teeth, and then allowing the film to dissolve. Prior to, concurrently, or subsequent to (i) placement of the film on the surface, (ii) dissolving of the film, or (iii) completion of the film dissolving; an oral care appliance can be used as described herein. Kits can be provided which include one or more of these application means as well as a toothbrush handle or body and a collection of interchangeable head components, each of which can be engaged with the body of the toothbrush.

A variety of sealing agents may be used in the present invention, some of which are disclosed in WO 2004/056325. The sealing agents may undergo photopolymerization and/or photocrosslinking and may include one or more of a monomer, a cross-linking agent, a comonomer, an initiator, an accelerator, and/or a stabilizer. The polymerization can result in a polymer, oligomer, hompolymer, copolymer, co-oligomer, blends, networks and combinations thereof. The polymerization may be a chain polymerization, a polycondensation polymerization, polyaddition polymerization, radical polymerization, ionic polymerization, anionic polymerization, cationic polymerization, emulsion polymerization, ring-opening polymerization, living polymerization, coordination polymerization or combinations thereof.

Acrylic monomers may be used for radical and cationic polymerization. Some acrylic monomers suitable for use with the present invention include bisphenol A dimethacrylate, Di-N-butylcarbamate of bisphenol A dimethacrylate, hexanediol dimethacrylate, methyl methacrylate, dimethylamino ethyl methacrylate, polyethylene oxide dimethacrylate and derivatives, hydroxyethyl methacrylate, bisphenol A dimethacrylate, trimethylolpropane triacrylate, trimethylolpropane trimethacrylate, pentaerythritol triacrylate, triethylene glycol dimethacrylate, ethylene glycol dimethacrylate, oxypropylated-Bisphenol A, Bisphenol A ethoxylate dimethacrylate, *bis*-phenol-A-diglycidyldimethacrylate (Bis-GMA), hydroxypropyl methacrylate, neopentyl glycol dimethacrylate, neopentyl dimethacrylate, 2-methacryloyloxyethyl 4-methoxyphenyl hydrogen phosphate, (2,2-bis(4-(methacryloxy)phenyl)propane, dipentaerythritol penta acrylate monophosphate, urethane dimethacrylate, 1,4-butanediol dimethacrylate, 2-hydroxymethacrylate, tetrahydrofurfuryl methacrylate, benzyl methacrylate, cyclohexyl methacrylate, diethylene glycol dimethacrylate, glycerin dimethacrylate, and combinations thereof. Vinyl monomers such as acrylic acid and methacrylic acid may also be suitable for use.

For cationic polymerization, epoxides and vinyl ether monomers may be suitable for use as well as the previously described acrylic monomers. Oxiranes (epoxides) include diepoxide of bisphenol F (Araldite™ GY281), Diepoxide of bisphenol A (Epon™ 825), 3,4-epoxy cyclohexyl methyl-3,4-epoxy cyclohexyl carboxylate (Cyracur™ UVR-6105). Other cycloaliphatic epoxy resins that may be suitable for use include those from Union Carbide with the tradenames UVR6110 and UVR6128. Epoxy-Polyols blends that may also be suitable for use include poly(tetrahydrofuran), poly(caprolactone triol), ethylene glycol. Polyethylene glycol and oxide may also be used. Fillers may be added to these formulations. The initiators used are traditionally onium salts such as diaryliodonium and triarylsulfonium.

Photosensitive monomers, oligomeric, or polymeric agents that undergo photocrosslinking when exposed to light may also be used. Crosslinking could be achieved with agents having unsaturated aromatic acid or ester units, such as cinnamic acid and cinnamic ester derivatives. Chalcone-based materials may also be used for the preparation of photocrosslinkable monomers, oligomers, polymers, and copolymers or combinations thereof.

Initiators may also be incorporated in the oral care composition comprising the monomer or may be applied sequentially in a second oral care composition following application of the monomer to the hard tissue. As used herein, the term "initiator" may be an agent that reacts with light to initiate or facilitate a reaction or interaction with a monomer, polymer, or other agent to form a film or coating on the hard tissue. Initiators may form radicals which propagate the polymerization reaction. Some initiators suitable for use with the present invention include metal based initiators, camphorquinone/amine initiators, and dyes/coinitiators. Some camphorquinone/amine initiators include a quinone derivative, such as camphorquinone (CAS# 10373-78-1), alone or in combination with an amine derivative. The amine derivative may be selected from the group consisting of N,N,3,5-tetramethyl aniline, poly(ethyleneimine), N,N,N,N-tetraethylediethylenetriamine, and N,N-diethylethylenediamine, and tetramethyle aniline. The initiator may be included in amount between about 0.1% and about 10% by weight of the oral care composition. Fillers may be added to mitigate undesirable shrinkage. Some examples include inorganic powders such as glass or clay and fibers, such as fumed silica. Fillers may be included in an amount between about 0.1% and about 90% by weight of the oral care composition.

Some non-limiting examples that may be suitable for use in an oral care composition are set forth below.

Example 1

    Bis-GMA
    Camphoriquinone

Example 2

    Bis-GMA
    Triethylene glycol dimethacrylate
    Camphoriquinone

Example 3

    Hydroxyethyl methacrylate (HEMA)
    Amino-polyester tetra-acrylate
    Camphoriquinone

Example 4

    Bis-GMA
    Neopentylglycol copolymer
    Camphorquinone

Example 5

    Diglycidyl ethyl Bisphenol A dimethacrylate
    Hexanediol dimethacrylate
    Camphoroquinone
    Fumed silica

Example 6

    Diepoxide of bisphenol A (Epon 825)
    4-octyloxy-phenyl-phenyl iodonium hexafluoroantimonate (0.1-5 wt%)
    Inhibitor/stabilizer

Example 7

    Bis-GMA
    Diepoxide of bisphenol F
    Camphorquinone (0.5 wt%)
    4-octyloxy-phenyl-phenyl iodonium hexafluoroantimonate (0.1-5 wt%)

The oral care compositions can contain other agents or actives in addition to a sealing agent, such as flavoring agents, abrasives, sweetening agents, coloring agents, opacifiers, anti-tartar agents, fluoride ion sources, and nutrients. These and other agents suitable for use with the present invention are described in USPN 6,589,512.

The oral care compositions herein may also comprise a thickening agent. In one embodiment the thickening agent (or viscosity modifier) can also function to increase retention of the composition on the hard tissue. The viscosity modifier may be present at a level of from about 0.01% to about 20%, in one embodiment from about 0.1% to about 10%, and in another embodiment from about 1% to about 3%, and in yet another embodiment from about 0.4% to about 5%, by weight of the composition. Suitable viscosity modifiers herein include natural and synthetic polymers and gums such as cellulose derivatives (e.g. methylcellulose, carboxypropylcellulose, hydroxyethylcellulose, hydroxypropylcellulose, etc.), carbomer polymers (e.g. polyacrylic acid copolymer or homopolymer and copolymers of acrylic acid cross linked with a polyalkenyl polyether), karaya gum, guar gum, gelatin, algin, sodium alginate, chitosan, polyethylene oxide, acrylamide polymers, polyvinyl alcohol, polyamines, polyquarternary compounds, ethylene oxide polymers, polyvinylpyrrolidone, cationic polyacrylamide polymers and mixtures thereof. In one embodiment the thickening agent is selected from carbomers, e.g. the class of homopolymers of acrylic acid crosslinked with an alkyl ether of pentaerythritol or an alkyl ether of sucrose. Carbomers are commercially available from B.F. Goodrich as the Carbopol series. In one embodiment the carbopols are Carbopol 934, 940, 941, 956, and mixtures thereof. In another embodiment the viscosity modifier is a hydrophobically modified carbomer. Hydrophobically modified carbomers can increase the retention of compositions herein and/or integral carriers on tooth surfaces and slow the erosion of the compositions once applied on the tooth surfaces. Suitable hydrophobically modified carbomers include acrylate/C10-C30 alkyl acrylate crosspolymer such as Carbopol 1382, Carbopol 1342, Carbopol 1392, and Carbopol ETD 2020, all available from BF Goodrich, and acrylates/C10-C30 alkyl acrylate crosspolymer such as Pemulen TR-1 and Pemulen TR-2 both available from B.F. Goodrich. In one embodiment mixtures of hydrophobically modified carbomers with carbomers can be used. In another embodiment carboxy functional silicones (diacid, monoacid) are used to increase retention of sealing agents on the hard tissue.

Another treatment agent that can be used with the present invention is an optical coupling agent. These compounds provide increased optical access into underlying tissue by reducing the amount of light scattering at the tissue surface. Exemplary optical coupling agents include glycerol; glucose; propylene glycol; polyethylene glycol; polyethylene glycol; x-ray contrasting agents (Trazograph-60, Trazo-graph-76, Verogrann-60, Verografin-76, and Hypaque-60); proteins (hemoglobin, albumin); and combinations thereof. The optical coupling agents can also be used with additives such as ethanol and water (e.g., ethanol, glycerol and water).

In yet another embodiment, a rinse is used to treat the hard tissue of the oral cavity either prior to emissions from the electric toothbrush. The rinse comprises a sealing agent and, optionally, a polymer which gives substantivity to the sealing agent, and/or helps adhere to the hard tissue. The teeth are then exposed to the energy emissions of the oral care device. The rinsed surfaces may be exposed to light during or immediately after contact with the rinse, or a time delay of from about 0 seconds to about 2 minutes can occur between rinsing and exposure of the rinsed surfaces to light. Printed instructions can be provided with the packaging that instruct a user to follow any combination of the steps described herein.

## Claims

1. An oral care composition for use as means for sealing one or more tooth surfaces containing a sealing agent for forming a sealing film on said tooth surfaces,
   **characterized in that**
   said oral care composition contains, in addition to said sealing agent, an abrasive for removing a previously formed sealing film before formation of a new film, whereby
   a toothbrush (10) having a handle (12) and a head (16) is used for activating said sealing agent, wherein said toothbrush (10) comprises a head (16) with bristles (49,51) for brushing the teeth with the abrasive to remove the previously formed sealing film and distributing the sealing agent, and
   a light emitting element (75) for emitting light onto said sealing agent to activate the sealing agent, wherein
   a switch is provided for switching on said light emitting element (75) after brushing the teeth, thereby forming a new sealing film after removal of the previously formed sealing film.

2. An oral care composition according to claim 1, wherein said toothbrush (10) is an electric toothbrush with a motor (32) for driving a bristle holder (20), wherein a controller for automatically turning off said motor during the activation process by means of the light emission is provided.

3. An oral care composition according to claim 1 or 2, wherein said head (16) with the bristles (49, 51) is detachable from the handle (12) and a second head (53) without bristles and including a light emitting element (75) is provided for replacing said head (16) with the bristles.

4. An oral care composition according to claim 3, wherein the toothbrush includes means for automatically turning on the light emitting element (75) after a time delay following attachment of the second head (53) to the handle (12).

5. An oral care composition according to one of the preceding claims, wherein the bristles (49, 51) include optically light transmitting bristles having a transparent or translucent core and an opaque circumference.

6. An oral care composition according to one of the preceding claims, wherein the oral care composition is a dentifrice.

7. An oral care composition according to one of the preceding claims, wherein the sealing agent comprises a monomer and/or a polymer.

8. An oral care composition according to one of the preceding claims, wherein the oral care composition further includes an initiator.

## Patentansprüche

1. Mundpflegezusammensetzung zur Verwendung als Mittel zur Versiegelung einer oder mehrerer Zahnoberflächen, enthaltend ein Versiegelungsmittel zur Bildung eines Versiegelungsfilms auf den Zahnoberflächen, **dadurch gekennzeichnet, dass** die Mundpflegezusammensetzung, zusätzlich zu dem Versiegelungsmittel, ein Schleifmittel zur Entfernung eines zuvor gebildeten Versiegelungsfilms vor der Bildung eines neuen Films enthält, wobei eine Zahnbürste (10) mit einem Griff (12) und einem Kopfstück (16) zur Aktivierung des Versiegelungsmittels verwendet wird, wobei die Zahnbürste (10) ein Kopfstück (16) mit Borsten (49, 51) zum Bürsten der Zähne mit dem Schleifmittel, um den zuvor gebildeten Versiegelungsfilm zu entfernen, und Verteilen des Versiegelungsmittels umfasst und ein lichtemittierendes Element (75) zum Emittieren von Licht auf das Versiegelungsmittel, um das Versiegelungsmittel zu aktivieren, wobei ein Schalter bereitgestellt wird, um das lichtemittierende Element (75) nach dem Bürsten der Zähne einzuschalten, wodurch ein neuer Versiegelungsfilm nach Entfernung des zuvor gebildeten Versiegelungsfilms gebildet wird.

2. Mundpflegezusammensetzung nach Anspruch 1, wobei die Zahnbürste (10) eine elektrische Zahnbürste mit einem Motor (32) zum Antreiben eines Borstenhalters (20) ist, wobei ein Regler zum automatischen Abschalten des Motors während des Aktivienmgsprozesses mittels der Lichtemission bereitgestellt wird.

3. Mundpflegezusammensetzung nach Anspruch 1 oder 2, wobei das Kopfstück (16) mit den Borsten (49, 51) von dem Griff (12) abnehmbar ist und ein zweites Kopfstück (53) ohne Borsten und mit einem lichtemittierenden Element (75) bereitgestellt wird, um das Kopfstück (16) mit den Borsten auszutauschen.

4. Mundpflegezusammensetzung nach Anspruch 3, wobei die Zahnbürste Mittel zum automatischen Einschalten des lichtemittierenden Elements (75) nach einer Zeitverzögerung nach Befestigung des zweiten Kopfstücks (53) an dem Griff (12) beinhaltet.

5. Mundpflegezusammensetzung nach einem der vorstehenden Ansprüche, wobei die Borsten (49, 51) optisch lichtdurchlässige Borsten beinhalten, die einen transparenten oder lichtdurchlässigen Kern und einen lichtundurchlässigen Umfang aufweisen.

6. Mundpflegezusammensetzung nach einem der vorstehenden Ansprüche, wobei die Mundpflegezusammensetzung eine Zahncreme ist.

7. Mundpflegezusammensetzung nach einem der vorstehenden Ansprüche, wobei das Versiegelungsmittel ein Monomer und/oder ein Polymer umfasst.

8. Mundpflegezusammensetzung nach einem der vorstehenden Ansprüche, wobei die Mundpflegezusammensetzung ferner einen Initiator beinhaltet.

**Revendications**

1. Composition de soins bucco-dentaires destinée à être utilisée en tant que moyen pour sceller une ou plusieurs surfaces dentaires contenant un agent de scellement pour former un film de scellement sur les surfaces dentaires, **caractérisée en ce que** ladite composition de soins bucco-dentaires contient, en plus dudit agent de scellement, un abrasif pour retirer un film de scellement préalablement formé avant la formation d'un nouveau film, de sorte qu'une brosse à dents (10) ayant une poignée (12) et une tête (16) est utilisée pour activer ledit agent de scellement, dans laquelle ladite brosse à dents (10) comprend une tête (16) avec des poils (49,51) pour brosser les dents avec l'abrasif pour enlever le film de scellement préalablement formé et répartir l'agent de scellement, et un élément d'émission de lumière (75) pour émettre une lumière sur ledit agent de scellement pour activer l'agent de scellement, dans laquelle un commutateur est prévu pour activer ledit élément d'émission de lumière (75) après le brossage des dents, de manière à former un nouveau film de scellement après le retrait du film de scellement préalablement formé.

2. Composition de soins bucco-dentaires selon la revendication 1, dans laquelle ladite brosse à dents (10) est une brosse à dents électrique avec un moteur (32) pour entraîner un support de poils (20), dans laquelle un dispositif de commande pour éteindre automatiquement ledit moteur pendant le processus d'activation au moyen de l'émission de lumière est prévu.

3. Composition de soins bucco-dentaires selon la revendication 1 ou 2, dans laquelle ladite tête (16) avec les poils (49, 51) est détachable de la poignée (12) et une seconde tête (53) sans poils, et comportant un élément d'émission de lumière (75) est fournie pour remplacer ladite tête (16) avec les poils.

4. Composition de soins bucco-dentaires selon la revendication 3, dans laquelle la brosse à dents comprend un moyen pour activer automatiquement l'élément d'émission de lumière (75) après une temporisation suivant le raccordement de la seconde tête (53) à la poignée (12).

5. Composition de soins bucco-dentaires selon l'une quelconque des revendications précédentes, dans laquelle les poils (49, 51) comprennent des poils émetteurs de lumière optique ayant une âme transparente ou translucide et une circonférence opaque.

6. Composition de soins bucco-dentaires selon l'une quelconque des revendications précédentes, dans laquelle la composition de soins bucco-dentaires est un dentifrice.

7. Composition de soins bucco-dentaires selon l'une quelconque des revendications précédentes, dans laquelle l'agent de scellement comprend un monomère et/ou un polymère.

8. Composition de soins bucco-dentaires selon l'une quelconque des revendications précédentes, dans laquelle la composition de soins bucco-dentaires comprend en outre un initiateur.

Fig. 1

Fig. 2

EP 1 874 263 B1

Fig. 3

14

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9934766 A
- WO 2004012621 A
- US 20030180690 A
- WO 2005023131 A
- US 20030126699 A
- US 20030084525 A
- US 20030084524 A
- US 20030084526 A
- WO 03063723 A
- WO 03063722 A
- US 6360395 B
- US 5617601 A
- US 20030134567 A
- US 20030163881 A
- US 3070510 A, Cooley & Grabenstetter
- US 3538230 A, DiGiulio
- US 3862307 A
- US 4340583 A
- US 5603920 A
- US 5589160 A
- US 5658553 A
- US 5651958 A
- US 20030194678 A
- US 6096328 A
- US 6136297 A
- US 6045811 A
- US 5989569 A
- US 5894017 A
- US 5891453 A
- US 5879691 A
- US 6277458 B
- US 6287120 B
- US 6343932 B
- US 5846058 A
- US 5816802 A
- US 5895218 A
- US 5310563 A
- US 5948430 A
- US 6709671 A
- WO 2004056325 A
- US PN6589512 A